# EUROPÄISCHE PATENTSCHRIFT

(11) **EP 0 578 051 B1**
(45) Veröffentlichungstag und Bekanntmachung des Hinweises auf die Patenterteilung: **27.12.1996**
(21) Anmeldenummer: 93109996.4
(22) Anmeldetag: 23.06.1993
(51) Int. Cl.: A01B 29/04

(54) **Stern- oder Packersternwalze**
Toothed packer roller
Rouleau de compactage à disques dentés

(30) Priorität: 06.07.1992 DE 4222141
(43) Veröffentlichungstag der Anmeldung: 12.01.1994
(73) Patentinhaber: Güttler, Fritz, D-73235 Weilheim (DE)
(72) Erfinder: Güttler, Fritz, D-73235 Weilheim (DE)
(74) Vertreter: Wilhelm & Dauster Patentanwälte European Patent Attorneys

(56) Entgegenhaltungen:
- DE-A- 3 541 542
- US-A- 1 776 851
- US-A- 2 537 802
- US-A- 2 660 817

## Beschreibung

Die Erfindung betrifft eine Stern- oder Packersternwalze zur Festigung landwirtschaftlicher Böden und Schollenzertrümmerung, bestehend aus mehreren auf einer gemeinsamen Achse parallel zueinander gelagerten und axial auf Abstand zueinander gehaltenen gezackten Walzenringen, deren Zacken prismenförmig ausgebildet, mit ihren Spitzen auf einem gemeinem Umkreisdurchmesser liegen und mit nach mindestens einer Seite von einer senkrecht zur gemeinsamen Achse stehenden Ebene aus pultdachförmig nach außen abfallenden Flanken versehen sind.

Stern- oder Packersternwalzen dieser Art, die auch unter der Bezeichnung "Prismenwalze" Marktgeltung erlangt hatte, sind aus der DE 27 47 535 C2 bekannt. Bei dieser bekannten Bauart sind jeweils zwei der eingangs genannten Walzenringe als Teilringe mit ihrer größeren Stirnseite gegeneinander gesetzt und es wird auch vorgesehen, daß einer der Teilringe einen größeren Umkreisdurchmesser besitzt, aber mit einer Hülse entsprechend größeren Innendurchmessers radial beweglich auf einer dem ersten Teilring zugeordneten Distanzbüchse sitzt.

Walzenringe der bei der bekannten Bauart verwendeten Form, die also einseitig nach einer Richtung pultdachförmig abfallende Flanken und Zackengrate besitzen, lassen sich aber auch einzeln zur Bodenbearbeitung einsetzen, weil sie im Gegensatz zu allen bis heute bekannten Bodenwalzen neben einer besseren Tiefen-Rückfestigungswirkung auch eine konstant gleichbleibende flache Oberbodenaufkrümelung in allen Bodenarten, auch mit breit gespannten Feuchtigkeitsgehalten und unter Aufsattelung von Fremdlasten in Form vorgekoppelter Bodenbearbeitungsmaschinen erreichen. Vorteilhaft ist auch, daß solche Bodenwalzen mit der Oberflächenaufkrümelung eine Bodenselektion dergestalt bewirken, daß die von der eventuell vorgekoppelten Bodenbearbeitungsmaschine zerlegten und von der Walze selber zu Feinkrümel zerdrückten Bodenteilchen durch das Ein- und Austauchen ihrer prismenartigen Zacken und die kurze Rührbewegung der Zackenspitzen im Saatoberbett in Bewegung gebracht werden und nach unten auf den flachliegenden Saathorizont rieseln, wo solche Feinkrümel zur optimalen Sameneinbettung und Kapillarwasseranbindung angeordnet sein sollen. Die gröberen Bodenkrümel dagegen werden aus dieser flachen Zone auf die Bodenoberfläche aussortiert, wo sie den denkbar besten Schutz gegen Bodenverschlämmung bei stärkeren Niederschlägen darstellen. Deshalb ist die sog. Prismenwalze in verschiedenen Varianten immer mehr und mehr an Bodenbearbeitungsmaschinen anstelle der bekannten Zahn-Packerwalzen, Stabwalzen, Spiralwalzen (US-PS 1 041 036, DE-PS 366294) vorgesehen worden.

Andere bekannte Bodenwalzen, wie sie unter dem Oberbegriff "Cambridgewalzen", "Crosskillwalzen", "Ringelwalzen" und dgl. bekannt sind, dienen in der Regel nur zum Nachwalzen von vorher eingesäten Ackerflächen und werden aus sachlichen Gründen zur Saatbettbereitung als Trag- und Rückfestigungswalzen hinter vorgesattelten Bodenbearbeitungsmaschinen nicht eingesetzt.

Durch den vielseitigen Anwendungsbereich im Solo- und im Kombinationsbetrieb der sog. Prismenwalzen nach DE 27 47 535 C2 sind auch die Ansprüche der Praxis an die Prismenwalzen gestiegen. Erwünscht wäre ein größeres Tragvermögen für vorgesattelte schwere Bodenbearbeitungsmaschinen mit großen Arbeitsbreiten von 4, 5 und 6 Metern, wie sie in der weithin umstrukturierten Landwirtschaft fortschreitend zur Anwendung kommen. Auf den Bodenbearbietungsmaschinen oft aufgesetzte Sämaschinen mit großen Saatgutbehältern erhöhen die Aufsattellast weiter beträchtlich, so daß in extremen Fällen hin und wieder das bisherige Tragvermögen der das Gesamtgewicht tragenden Prismenwalzen überschritten ist.

Der Erfindung liegt daher die Aufgabe zugrunde, bei einer Stern- oder Packersternwalze der eingangs genannten Art unter Beibehaltung der Vorteile solcher Walzen die Tragfähigkeit zu erhöhen.

Dies wird bei einer Stern- oder Packersternwalze der eingangs genannten Art dadurch erreicht, daß die von den Flanken gebildeten Täler zwischen benachbarten Zacken zumindest über einen Teil ihrer Länge einen ausgerundeten Talgrund besitzen. Durch diese Ausgestaltung weisen die Prismenflanken nicht mehr, wie bisher, einen konstanten Flankenwinkel auf, sondern einen veränderlichen Flankenwinkel. Die dadurch flacher ausgeführten Täler bringen eine Verbesserung der Tragfähigkeit mit sich, ohne daß aber die Eindringetiefe der prismenförmigen Zacken selbst zu groß wird. Durch diese Ausgestaltung braucht die Lauffläche selbst nicht verbreitert zu werden, und es ist auch nicht notwendig, die Nachteile der sich dadurch ergebenden längeren Prismenspitzen, die tiefer in den Boden einstechen, in Kauf zu nehmen. Bekannterweise wird bei längeren Prismenspitzen, die tiefer in den Boden greifen, die beim Abrollen von den Prismenspitzen aufgekrümelte Deckschicht zu mächtig. Der rückverfestigte Saathorizont würde dann tiefer als die gewünschten 3 cm liegen. Außerdem würde bei längeren Prismenspitzen auch die Gefahr bestehen, daß feuchter Boden mit heraufgeholt wird, der zum einen die Prismenspitzen, zum anderen aber bei z.B. tonhaltigen Böden, zur Bildung von Bodenfladen führen kann und die nachfolgende Saat behindert.

Eine vorteilhafte Weiterbildung der Erfindung besteht nach Anspruch 2 darin, daß der Scheitel des Talgrundes und der jeweils zwischen Flanken benachbarter Täler gebildete Zackengrat entlang von Geraden verlaufen, welche die gemeinsame Achse schneiden, auf der die Walzenringe sitzen, und wenn der Winkel, den die im Scheitel des Talgrundes verlaufende Gerade mit der gemeinsamen Achse bildet, kleiner ist als der Winkel, den die durch den Zackengrat verlaufende Gerade mit der gemeinsamen Achse bildet. Durch diese Ausgestaltung nämlich bleiben die Zackenprismen genügend spitz ausgebildet und sie können daher auch harte Schollen ausgezeichnet zerteilen. Trotzdem ist die Tragfähigkeit erhöht.

Eine weitere vorteilhafte Weiterbildung besteht darin, daß der Radius des Talgrundes am Übergang zu der größeren der beiden senkrecht zu der gemeinsamen Achse stehenden Stirnseiten kleiner ist als der Radius des Talgrundes am Übergang zu der kleineren Stirnseite. Durch diese Ausgestaltung ergibt sich eine bessere Selbstreinigung der Stern- oder Packersternwalze. Beim Eindringen der steilen Prismenspitzen in das Erdreich wird nämlich eventuell dort anhaftender Boden in Richtung zum Tal weggeschoben. Dabei wird das Abschieben des Bodens von den Spitzen durch deren steile Flanken begünstigt. Der sich zu dem Talausgang öffnende Verlauf der Täler sorgt dafür, daß sich die von den Spitzen ausgehende Schubbewegung in die flachen Täler hinein fortpflanzt und dort anhaftender Boden durch diese Schubwirkung weggeschoben wird. Durch die Erfindung kann daher trotz flacher Flankenwinkel im Tal, durch die die Tragfähigkeit erhöht werden kann, eine ausgezeichnete Selbstreinigung erreicht werden.

Schließlich ist es nach Anspruch 4 auch möglich und zweckmäßig, die entlang des Zackengrates verlaufende Gerade den Scheitel einer in etwa zylindermantelförmigen Abrundung des Zackengrates bilden zu lassen. Durch diese Ausgestaltung wird eine Verstärkung der gesamten Walze erreicht.

Durch die Erfindung wird es möglich, daß die Prismenspitzen den Druck besser zur Seite ausüben als bisher. Man kann daher den Abstand zwischen einzelnen Walzenringen erhöhen, ohne daß dadurch die Rückfestigung leidet. Das wiederum führt dazu, daß man weniger Walzenringe braucht, so daß die gesamte Walzenanordnung leichter werden kann. Durch die Ausrundung der Täler wird außerdem eine Kerbwirkung beseitigt. Die Kraftverteilung von der Spitze her in Richtung zu der Nabe kann dadurch verbessert werden. Der gesamte Walzenring wird stabiler und ist weniger bruchgefährdet, auch dann, wenn extreme punktförmige Belastung, z.B. auf steinigen Böden, auftritt. Schließlich muß das Gesamtgewicht der neuen Walzenringe nicht erhöht werden. Es hat sich gezeigt, daß bei scholligen Böden die Sprengwirkung besser ist.

Die Erfindung ist in der Zeichnung anhand eines Ausführungsbeispieles dargestellt und wird im folgenden erläutert. Es zeigen:
- Fig. 1: Eine Ansicht eines ersten Ausführungsbeispieles eines Walzenringes einer erfindungsgemäßen Stern- oder Packersternwalze,
- Fig. 2a: den Schnitt durch den Walzenring der Fig. 1 längs der Linie IIa-IIa,
- Fig. 2b: den Schnitt durch den Walzenring der Fig. 1 längs der Linie IIb-IIb,
- Fig. 3: eine Teilansicht einer anderen Ausführungsform eines Walzenringes gem. der Erfindung,
- Fig. 4: eine Schnittdarstellung eines Walzenringes ähnlich der Darstellung in den Fig. 2a und 2b, jedoch mit zusätzlich eingezeichneten Druckwirkungslinien, wie sie von dem neuen Walzenring auf den Boden ausgeübt werden,
- Fig. 5a: eine Ansicht ähnlich Fig. 1, jedoch in einer abgewandelten Ausführungsform und
- Fig. 5b: eine Ansicht ähnlich Fig. 1, jedoch in einer weiteren Ausführungsform.

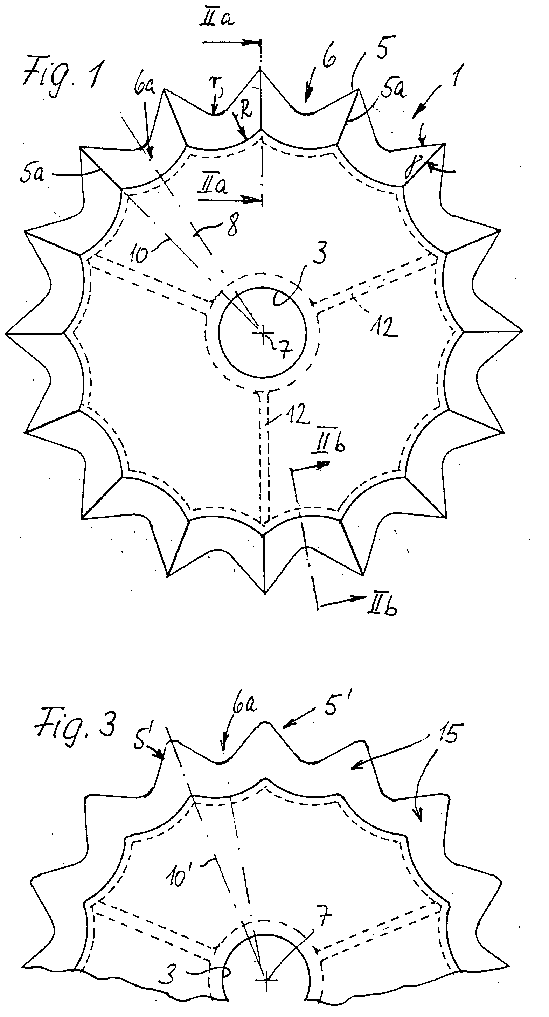

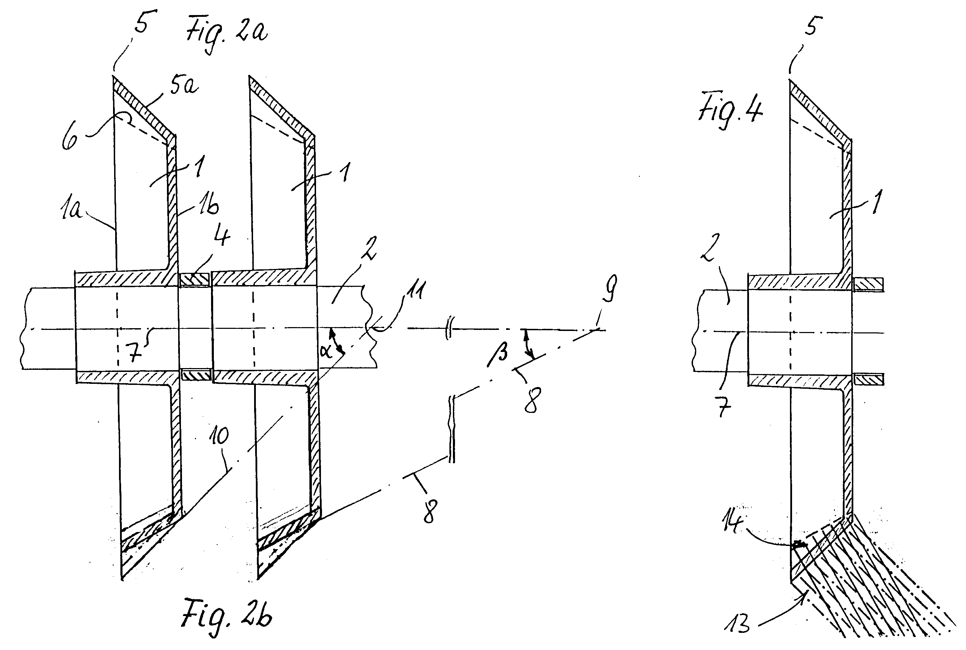

In der Fig. 1 ist ein Walzenring (1) gezeigt, der gem. den Fig. 2a und 2b mit mehreren gleichgestalteten Walzenringen mit Hilfe seiner Nabe (3) auf einer gemeinsamen Achswelle (2) angeordnet werden kann. Zwischen den Walzenringen (1) kann auf der Achswelle (2) jeweils ein Distanzring (4) angeordnet sein, der den axialen Abstand von Zwei benachbarten Walzenringen (1) bestimmt. Es ist natürlich auch möglich, den Distanzring (4) als Teil der Walzenringe (1) auszuführen. Die Nabe (3) und die Achswelle (2) können einen runden oder auch einen mehreckigen Querschnitt aufweisen.

Aus der Fig. 1 ergibt sich, daß jeder Walzenring (1) mit mehreren nach außen abstehenden prismenartig gestalteten Zacken (5) und jeweils dazwischen liegenden Tälern (6) versehen ist. Die Zacken (5) sind dabei in gleichmäßigen Abständen auf den Umfang der Walzenringe (1) verteilt. Ihr Spitzenwinkel beträgt beim Ausführungsbeispiel etwas weniger als 90°.

Aus den Fig. 2a und 2b ergibt sich, daß sowohl die Zacken (5) mit ihren Zackengraten (5a), als auch die dazwischen liegenden Täler (6) pultdachförmig von einer größeren Stirnseite (1a) des Walzenringes (1) aus, die senkrecht zu der Achse (7) der Achswelle (2) steht und beim Ausführungsbeispiel von dem offenen, umlaufenden Rand der im wesentlichen topfförmig ausgebildeten Walzenringe (1) gebildet ist, nach einer Seite hin schräg abfallen. Die Täler (6) sind so abgerundet ausgebildet, daß sich der vom Zackengrat (5a) jeweils nach beiden Seiten ergebende Dachwinkel der Flanken ändert und nicht konstant bleibt. Dabei erläuft der Scheitel des Talgrundes (6a) entlang einer Geraden (8), welche die Achse (7) im Punkt (9) schneidet. Auch der Zackengrat (5a) läuft entlang einer Geraden (10), die sich im Punkt (7) (Fig. 2a, 2b) mit der Achse (7) schneidet. Dabei ist der Winkel β ,den die Gerade (8) am Scheitel des Talgrundes (6a) mit der Achse (7) bildet, kleiner als der Winkel α , den die Gerade (10) mit der Achse (7) bildet. Beim Ausführungsbeispiel beträgt der Winkel β beispielsweise 30°, während der Winkel α 45° beträgt.

Der Talgrund (6a) geht überdies in die größere Stirnseite (1a) des Walzenringes (1), mit einem Radius (r) über, der wesentlich kleiner ist als der Radius (R), den der Talgrund (6a) am Übergang zu der geschlossenen Stirnseite (1b) des Walzenringes bildet. Beim Ausführungsbeispiel, bei dem der Gesamtdurchmesser des Walzenringes etwa 40 cm ist, könnte der Radius (r) zwischen 8 und 14 mm und der Radius (R) eineinhalb bis 4 mal so groß sein. Die Täler (6) zwischen benachbarten Zacken (5) und benachbarten Zackengraten (5a) werden durch diese Ausgestaltung von ihrem Eingang her, d.h. also von dem umlaufenden und die Stirnseite (1a) bildenden Rand des Walzenringes (1) her zu der nach innen abfallenden und in die geschlossene Seite (1b) über-gehenden Seite hin immer breiter. Auch die Flankenwinkel (γ), die die Zackengrate (5a) zum Talgrund (6a) hin bilden, werden daher immer flacher. Da aber an den außenliegenden Zacken (5) auch steile Flanken vorhanden sind, die dann zur Innenseite hin immer flacher werden, wird der von den Zacken (5) verdrängte Boden unter Druck zu den innenliegenden Ausgängen der Täler geführt. Da die Täler hier breiter werden, ergibt sich auf diese Weise eine ausgezeichnete Selbstreinigungswirkung für die neuen Walzenringe. Trotzdem ist die Tragwirkung der neuen Walzenringe durch die breiteren Täler erhöht.

Die topfartig ausgebildeten Walzenringe (1) können von ihrer Nabe (3) ausgehend durch radial verlaufende Streben (12) verstärkt sein.

Die Fig. 4 zeigt, daß der Drucklinienfächer (13), der jeweils im rechten Winkel von den in den Tälern (6) und den Flanken der Zacken (5) gebildeten Flächen ausgeht, wegen des steileren Winkels mehr zu einer benachbarten Walze gerichtet sein kann. Dies führt zu einer Verfestigung des Bodens in dieser Richtung, so daß der Abstand benachbarter Walzenringe größer gewählt werden kann. Auf der anderen Seite bleibt der von den Tälern (6) aus in den Boden gerichtete Druckfächer (14) zum Boden hin gerichtet. Er erhöht die Tragfähigkeit.

Es wäre durchaus möglich, die Ausrundung der Täler (6) am Talgrund (6a) auch mit gleichen Radien (r, R) auszuführen. Auch eine solche Ausgestaltung würde schon eine Verbesserung bewirken. Die Selbstreinigungswirkung allerdings wird durch die vorgenommene Ausgestaltung des Ausführungsbeispiels besser. Es ergibt sich von selbst, daß die Ausrundung am Talgrund (6a) auch eine unerwünschte Kerbwirkung in mechanischer Hinsicht vermeidet. Die Festigkeit der neuen Walzenringe ist daher, neben ihren funktionsmäßigen Vorteilen, auch sehr hoch.

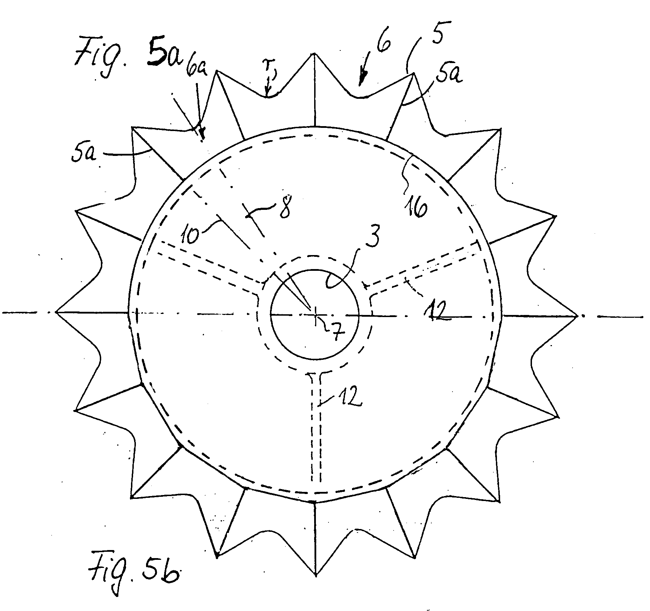

Das kann auch noch dadurch verbessert werden, daß gem. Fig. 3 nicht nur der jeweilige Talgrund (6a) zwischen den Zacken (5') abgerundet wird, sondern, daß anstelle des dachförmigen Zackengrates (5a) eine etwa zylindermantelförmige Abrundung (15) den entsprechenden Zackengrat bildet. Auch in diesem Fall bildet aber die entlang des Zackengrates verlaufende Gerade (10') den Scheitel der zylindermantelförmigen Abrundung (15). Die Ausbildung des Talgrundes (6a) bleibt gegenüber dem Ausführungsbeispiel der Fig. 1 gleich.

Die Fig. 5a und 5b zeigen weitere Ausführungsformen erfindungsgemäß ausgestalteter Walzenringe. Sie unterscheiden sich von den Ausführungsformen der Fig. 1 bis 4 dadurch, daß der Talgrund (6a) am Talausgang, d.h. am Übergang der kleineren Stirnseite (1b) der Walzenringe keine konkave Wölbung mit einem Radius (R) aufweist, sondern etwas konvex nach innen gewölbt ist, und zwar mit einer Krümmung, die dem Radius des äußeren Umfanges (16) der kreisförmigen Stirnseite (1b) entspricht.

Die Variante der Fig. 5b unterscheidet sich wiederum gegenüber jener der Fig. 5a dadurch, daß der Talgrund (6a) an der Schnittstelle mit der Stirnseite (1b) jeweils in Geraden (17) übergeht, so daß hier die Ansicht der Stirnseite (1b) ein Polygon bildet. Auch bei diesen Varianten werden noch Vorteile ähnlich derer bei der Ausführungsform der Fig. 1 bis 4 erreicht, obwohl sich gezeigt hat, daß die Beibehaltung konkaver Talgründe (6a) zwischen den Zacken (5) doch noch zweckmäßiger ist.

## Patentansprüche

1. Stern- oder Packersternwalze zur Festigung landwirtschaftlicher Böden und zur Schollenzertrümmerung, bestehend aus mehreren auf einer gemeinsamen Achse (7) parallel zueinander gelagerten und axial auf Abstand zueinander gehaltenen gezackten Walzenringen (1), deren Zacken (5, 5') prismenförmig ausgebildet, mit ihren Spitzen auf einem gemeinsamen Umkreisdurchmesser liegen und mit nach einer Seite von einer senkrecht zur gemeinsamen Achse stehenden Ebene (1a) aus pultdachförmig nach außen abfallenden Flanken versehen sind, dadurch gekennzeichnet, daß die von den Flanken gebildeten Täler (6) zwischen benachbarten Zacken (5, 5') zumindest über einen Teil ihrer Länge einen ausgerundeten Talgrund (6a) besitzen, so daß die Tragfähigkeit erhöht wird.

2. Stern- oder Packersternwalze nach Anspruch 1, dadurch gekennzeichnet, daß der Scheitel des Talgrundes (6a) und der jeweils zwischen Flanken benachbarter Täler (6) gebildete Zackenrücken (5a) entlang von Geraden (8, 10) verlaufen, welche die gemeinsame Ache (7) schneiden, und daß der Winkel β , den die im Scheitel des Talgrundes (6a) verlaufende Gerade (8) mit der gemeinsamen Achse (7) bildet, kleiner ist als der Winkel α, den die durch den Zackenrücken (5a) verlaufende Gerade (10) mit der gemeinsamen Achse (7) bildet.

3. Stern- oder Packersternwalze nach Anspruch 1, dadurch gekennzeichnet, daß der Radius (r) des Talgrundes (6a) am Übergang zu der größeren der beiden senkrecht zu der gemeinsamen Achse (7) stehenden Stirnseiten (1a) kleiner ist als der Radius (R) des Talgrundes am Übergang zu der kleineren Stirnseite (1b).

4. Stern- oder Packersternwalze nach einem der Ansprüche 1 bis 3, dadurch gekennzeichnet, daß die entlang des Zackenrückens verlaufende Gerade (10') den Scheitel einer in etwa zylindermantelförmigen Abrundung (15) des Zackenrückens bildet.

5. Stern- oder Packersternwalze nach Anspruch 1, dadurch gekennzeichnet, daß das Talende am Übergang zu der kleineren Stirnseite (1b) in eine Gerade übergeht.

6. Stern- oder Packersternwalze nach Anspruch 1, dadurch gekennzeichnet, daß das Talende am Übergang zu der kleineren Stirnseite (1b) eine entgegengesetzt zum Radius (r) am Übergang zu der größeren Stirnseite (1a) gerichtete Krümmung aufweist.

7. Stern- oder Packersternwalze nach Anspruch 6, dadurch gekennzeichnet, daß die Krümmung dem Radius des Umfanges der kreisförmigen Stirnseite entspricht.

8. Stern- oder Packersternwalze nach Anspruch 1, dadurch gekennzeichnet, daß der von den Flanken mit den Zackengraten (5a) gebildeten Winkel (γ) bis zum Talgrund (6) immer größer wird.

## Claims

1. Star roller or star packer roller, for consolidate agricultural soils and for clod breaking, consisting of a plurality of toothed roller tires (1) which are disposed on a common shaft (7), parallel to one another and retained at a distance from one another axially, the teeth (5,5') of which are prism-shaped, disposed with their tips on a common circumferential diameter, and provided, on one side of a plane (1a) which is perpendicular to the common shaft, with flanks which are inclined towards the exterior in the shape of a monopitch roof, characterised in that the valleys (6) formed by the flanks between adjacent teeth (5,5') comprise, over at least one part of their length, a hollowed-out valley base (6a), such that the resistance to load is increased.

2. Star roller or star packer roller according to Claim 1, characterised in that the lowest point of the valley base (6a), and the tooth ridge (5a) which is formed between the flanks of adjacent valleys (6) in each case, extend along straight lines (8,10) which intersect the common shaft (7), and in that the angle β, which the straight line (8) which extends in the lowest point of the valley base (6a) forms with the common shaft (7), is smaller than the angle α which the straight line (10) passing through the tooth ridge (5a) forms with the common shaft (7).

3. Star roller or star packer roller according to Claim 1, characterised in that the radius (r) of the valley base (6a) is smaller where it merges into the larger of the two end faces (1a) which are perpendicular to the common axis than the radius (R) of the valley base where it merges into the smaller end face (1b).

4. Star roller or star packer roller according to one of Claims 1 to 3, characterised in that the straight line (10') extending along the tooth ridge forms the highest point of an approximately cylinder liner shaped curvature (15) of the tooth ridge.

5. Star roller or star packer roller according to Claim 1, characterised in that the valley end merges into a straight line where it merges into the smaller end face (1b).

6. Star roller or star packer roller according to Claim 1, characterised in that the valley end comprises, where it merges into the smaller end face (1b), a curvature which is directed opposite to the radius (r) where it merges into the larger end face (1a).

7. Star roller or star packer roller according to Claim 6, characterised in that the curvature corresponds to the radius of the circumference of the circular end face.

8. Star roller or star packer roller according to Claim 1, characterised in that the angle (γ) formed by the flanks with the tooth ridges (5a) increases continuously to the valley base (6).

## Revendications

1. Rouleau à profil étoilé ou rouleau de compactage à profil étoilé pour consolider des sols agricoles ou fragmenter des mottes de terre, constitué par plusieurs anneaux dentés (1), supportés parallèlement les uns aux autres sur un axe commun (7) et maintenus à une distance axiale réciproque et dont les dents (5,5') sont réalisées avec une forme prismatique, les pointes étant situées sur un cercle circonscrit commun, les dents étant pourvues de flancs qui s'abaissent d'un côté vers l'extérieur avec une forme de toit à un versant, à partir d'un plan (1a) qui est perpendiculaire à l'axe commun, caractérisé en ce que les creux (6), formés par les flancs et présents entre les dents voisines (5,5'), possèdent, au moins sur une partie de leur longueur, un fond arrondi (6a), de sorte que la portance est accrue.

2. Rouleau à profil étoilé ou rouleau de compactage à profil étoilé selon la revendication 1, caractérisé en ce que le point le plus bas du fond (6a) des creux et le dos (5a) des dents, formé respectivement entre les flancs de creux voisins (6), s'étendent suivant des droites (8,10), qui recoupent l'axe commun (7), et que l'angle β, que la droite (8) passant au point le plus bas du fond (6a) des creux fait avec l'axe commun (7), est inférieur à l'angle α que la droite (10), qui passe par les dos (5a) des dents, fait avec l'axe commun (7).

3. Rouleau à profil étoilé ou rouleau de compactage à profil étoilé selon la revendication 1, caractérisé en ce que le rayon (r) du fond (6a) du creux au niveau de la jonction avec la plus grande des deux faces frontales (1a), qui sont perpendiculaires à l'axe commun (7), est inférieur au rayon (R) du fond du creux au niveau de la jonction avec la face frontale la plus petite (1b).

4. Rouleau à profil étoilé ou rouleau de compactage à profil étoilé selon l'une des revendications 1 à 3, caractérisé en ce que la droite (10'), qui s'étend le long du dos d'une dent, forme la partie sommitale d'un arrondi (15) approxmativement en forme d'enveloppe cylindrique du dos de la dent.

5. Rouleau à profit étoilé ou rouleau de compactage à profit étoilé selon la revendication 1, caractérisé en ce que l'extrémité du creux au niveau de la jonction avec la face frontale la plus petite (1b) se prolonge par une droite.

6. Rouleau à profil étoilé ou rouleau de compactage à profit étoilé selon la revendication 1, caractérisé en ce que l'extrémité du creux au niveau de la jonction avec la face frontate la plus petite (1b) possède une courbure dirigée en sens opposé du rayon (r) au niveau de la jonction avec la face frontale la plus grande (1a).

7. Rouleau à profit étoilé ou rouleau de compactage à profil étoilé selon la revendication 6, caractérisé en ce que la courbure correspond au rayon de la périphérie de la face frontale de forme circulaire.

8. Rouleau à profil étoilé ou rouleau de compactage à profil étoilé selon la revendication 1, caractérisé en ce que l'angle (γ), formé par les flancs avec les dos (5a) des dents augmente de plus en plus en direction du fond (6) du creux.
